**Europäisches Patentamt**

**European Patent Office**

**Office européen des brevets**

(19)

(11) Veröffentlichungsnummer: **0 069 904**
**A1**

(12) # EUROPÄISCHE PATENTANMELDUNG

(21) Anmeldenummer: **82105698.3**

(22) Anmeldetag: **28.06.82**

(51) Int. Cl.³: **C 09 J 3/16**
**C 08 L 61/06, C 08 K 5/54**
**C 08 J 5/12**

(30) Priorität: **06.07.81 DE 3126603**

(43) Veröffentlichungstag der Anmeldung:
**19.01.83 Patentblatt 83/3**

(84) Benannte Vertragsstaaten:
**AT BE CH DE FR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Ozelli, Riza Nur, Dr.**
**Stephausstrasse 37**
**D-4040 Neuss 22(DE)**

(72) Erfinder: **Hoffmann, Hans-Josef**
**Möhlenring 63**
**D-4152 Kempen 1(DE)**

(54) **Bindemittel für Fluorkautschuk.**

(57) Bindemittel für Fluorelastomere auf Basis von reaktionsfähigen Alkoxysilanen sowie reaktiven Phenolharzen bzw. Phenolharzvorkondensaten, wobei das Gewichtsverhältnis der beiden Komponenten zwischen 1 : 5 bis 1 : 0,1 liegen soll und die Bindemittel in niederen Ketonen, Alkoholen oder Estern gelöst sind sowie deren Verwendung zum festen Verbinden von Stahl und Messing mit Fluorkautschuk durch Aufvulkanisieren.

EP 0 069 904 A1

Croydon Printing Company Ltd

0069904

HENKEL KGaA
ZR-FE/Patente
Dr. SchOe/Ge

Henkelstraße 67

4000 Düsseldorf, den 24. Juni 1982

Patentanmeldung

D 6400 EP

"Bindemittel für Fluorkautschuk"

---

Fluorkautschuk zeichnet sich durch besondere chemische Resistenz gegenüber verschiedenen Chemikalien aus und hat überdies eine ausnehmend gute thermische Beständigkeit. Wahrscheinlich aufgrund dieser an sich wünschenswerten Eigenschaften treten Schwierigkeiten auf, wenn Fluorkautschuk mit verschiedenen Metallen zu in der Technik an vielen Einsatzgebieten benötigten Verbundkörpern verarbeitet werden soll.

Es hat daher seit längerer Zeit nicht an Versuchen gefehlt, geeignete Bindemittel zu finden, die einwandfreie Verbunde zwischen verschiedenen Metallen und Fluorelastomeren insbesondere unter Vulkanisationsbedingungen bewirken.

So wurden die verschiedensten Aminogruppen oder andere reaktive Gruppierungen enthaltenden Silane für diesen Zweck herangezogen. Allerdings führen Silane, auch substituierte und reaktionsfähige Gruppen enthaltende Silane, nicht immer zu befriedigenden Verbundkörpern. Es ist daher meist notwendig, durch weitere Zusätze zum Binde- bzw. Klebmittel eine Steigerung der sehr

...

erwünschten Temperaturbeständigkeit zu erreichen. In diese Richtung zielen Versuche mit solchen Systemen, die Doppelbindungen und Peroxide oder Epoxidgruppen und Vernetzer für Epoxidgruppen enthalten.

Abgesehen davon, daß diese Systeme aufgrund der innewohnenden Reaktionsbereitschaft hinsichtlich der Haltbarkeit zu wünschen übrig lassen, sind sie auch nicht so universell einsetzbar, wie man es für ein Bindemittel zum Verbinden von Fluorelastomeren mit den verschiedensten Metallen verlangen muß.

Aufgabe der vorliegenden Erfindung war es daher, die Nachteile zu beseitigen, die vielen Bindemitteln nach dem Stand der Technik noch anhaften und ein neues Bindemittel zum Aufvulkanisieren von Fluorelastomeren auf Metallflächen zu finden, das, bestehend aus einfach zugänglichen Bestandteilen, ein haltbares, d.h. lagerfähiges Bindemittel ergibt. Es soll universal einsetzbar zu Verbindungen mit guter thermischer Belastbarkeit führen.

Erfindungsgemäß wird diese Aufgabe gelöst durch ein Bindemittel, das in organischen Lösungsmitteln enthält
a) ein reaktive Gruppen enthaltendes Alkoxysilan sowie
b) ein noch reaktives Phenolharz bzw. Phenolharzvorkondensat, wobei das Gewichtsverhältnis von a : b zwischen 1 : 5 bis 1 : 0,1 liegen soll.

Nach einer bevorzugten Ausführungsform liegt das Gewichtsverhältnis von a : b zwischen 1 : 2,5 bis 1 : 0,5. Der Gesamtfeststoffgehalt des Bindemittels soll zweckmäßig zwischen etwa 5 und 30 Gew.-% liegen.

. . .

Die in der Kombination zu verwendenden Silane sind bekannte Verbindungen, die allgemein als sogenannte Haftvermittler von den kommerziellen Herstellern empfohlen werden. Erfindungsgemäß sind bevorzugt die reaktive Gruppen enthaltenden wie etwa Vinyltriethoxysilan, Vinyltrimethoxysilan, Vinyl-tris(ß-methoxyethoxy)-silan, $\gamma$-Methacryloxypropyltrimethoxy-silan, $\gamma$-Methacryloxypropyl-tris(2-methoxyethoxy)-silan, $\gamma$-Mercaptopropyl-trimethoxy-silan, $\gamma$-Aminopropyltriethoxysilan oder das Addukt von Acrylsäure an diese Verbindung.

Weiterhin kommen folgende Silane in Frage: $\gamma$-Chloropropyltrimethoxy-silan, $\gamma$-Glycidoxypropyltrimethoxy-silan, Vinyltriacetoxysilan, ß(3,4-Epoxycyclohexyl)-ethyltrimethoxysilan sowie N-ß-(aminoethyl)-$\gamma$-aminopropyltrimethoxysilan bzw. dessen Methacrylsäureaddukt in methanolischer Lösung.

Bei den in der erfindungsgemäßen Kombination einzusetzenden, noch reaktive Gruppen, insbesondere OH-Gruppen aufweisenden Phenolharzen handelt es sich um seit Jahrzehnten bekannte Verbindungen bzw. Gemische von Verbindungen, die in weiterer Reaktion vernetzen können. Ein besonderes Feld der Anwendung liegt in der Herstellung von Überzügen. Derartige Phenolharze sollten für den erfindungsgemäßen Einsatz eine Viskosität bei 25° C von etwa 1 000 bis 5 000 mPa·s aufweisen und noch OH-Zahlen von etwa 300 bis 550 haben. Als Basis für die Herstellung dieser Harze dient in erster Linie Phenol selbst. Selbstverständlich ist die Mitverwendung von substituierten Phenolen wie den Kresolen, tert. Butylphenol, Amylphenol oder von Resorcin oder Bisphenol-A und dergleichen bekannt und möglich.

0069904

HENKEL KGaA
. ZR-FE/Patente .

Die Reaktionsführung kann so gestaltet werden, daß entweder Resole oder Novolake anfallen. Weiter ist es möglich und auch oft günstig, weiter in an sich bekannter Weise zu modifizieren wie etwa eine Teilveretherung der OH-Gruppen etwa mit Allylalkohol vorzunehmen.

Es hat sich hinsichtlich der Wärmestabilität der mit den Bindemitteln durch Aufvulkanisieren von Kautschuk auf stabile Unterlagen als günstig erwiesen, Gemische aus noch reaktionsfähigen Phenolharzen einzusetzen. Hierbei sollen dann auf 100 Gewichtsteile des Silans entfallen 10 bis 40 Gewichtsteile eines substituierten Phenolharzes, zum Beispiel Butylphenolharz, und 20 bis 80 Gewichtsteile eines normalen nicht substituierten Phenolharzes.

Als Lösungsmittel für die aufzutragenden Kombinationen aus Alkoxysilanen und phenolischen Harzen sind insbesondere Ketone, Ester und Alkohole zu erwähnen, die selbstverständlich im Verschnitt mit anderen üblichen Lösungsmitteln wie aromatischen Kohlenwasserstoffen oder aliphatischen Kohlenwasserstoffen sowie Halogen-Kohlenwasserstoffen verarbeitet werden können.

Bewährte Lösungsmittel sind insbesondere Methylethylketon, Ethylacetat, Propanol, Ethanol sowie gegebenenfalls Methanol. Im Lösungsmittel kann als besonders günstige Ausführungsform Silan : Phenolharz im Gewichtsverhältnis zwischen 1 : 1,5 und 1 : 0,7 vorliegen.

Die erfindungsgemäßen Bindemittel können praktisch für alle bekannten Fluorelastomeren verwendet werden, die als Copolymerisate von Vinylidenfluorid, Hexafluorpropylen, Tetrafluorethylen und dergleichen im Handel sind. Diese Handelsprodukte enthalten häufig

. . .

0069904

HENKEL KGaA
ZR-FE/Patente

vom Hersteller her bereits an sich bekannte Vernetzungsmittel wie Amine oder organische Phosphorsalze und werden
als selbsthärtende Systeme bezeichnet. Selbstverständlich
wird man in Abhängigkeit vom eingesetzten Elastomerentyp
die üblichen Hilfsmittel für die Vulkanisation mitverwenden.

Es kommen hier insbesondere helle Füllstoffe wie
$CaCO_3$, $MgO$, $(CaOH)_2$ und die verschiedenen Kieselsäuren
in Frage, wie auch dunkle Füllstoffe (Rußsorten) oder auch
Bleiverbindungen (z.B. $PbO$). In manchen Fällen ist auch
die Mitverwendung von weiteren Kautschukchemikalien
(Wachse, Fettsäure, mehrfunktionelle Allylverbindungen,
Peroxiden und dergleichen) üblich und zweckmäßig.
Die vorstehend genannten Zusätze sind als Hilfsmittel
durchaus bekannt und werden, wie bereits erwähnt, der zu
vulkanisierenden Elastomermischung zugesetzt.

Das Bindemittel selbst enthält im Normalfall  nur die
beiden wesentlichen Komponenten als Lösung. Es ist
natürlich möglich, auch weitere Hilfsstoffe in die Bindemittellösung selbst einzuarbeiten. Diese könnten in
der Hitze wirksame Vernetzer, Stabilisatoren gegen
thermischen Abbau von Harzen oder auch Farbstoffe
oder Komplexbildner sein.

Die mit dem Elastomeren zu verbindenden metallischen
Werkstoffe wie Eisen, insbesondere Stahl, Messing,
Kupfer, Bronze, Zink oder Aluminium sollten in üblicher
Weise vorbereitet, das heißt gestrahlt und entfettet
sein.

## Beispiele

In den nachfolgenden Beispielen wurden die folgenden Fluorelastomer-Mischungen zum Aufvulkanisieren auf Stahl (V2A) während 10 min in der Presse bei 170° C verwendet.

In der nachfolgenden Tabelle 1 bedeuten die Zahlenangaben Gewichtsteile.

### Tabelle 1

| Mischungsbestandteile | | A | B | C | D |
|---|---|---|---|---|---|
| Fluorelastomeres | (Viton B) | 100 | – | 100 | – |
| " | (Viton E 60 C) | – | 100 | – | – |
| " | (Viton VTR 5362) | – | – | – | 100 |
| Ruß (MT-Ruß) | | 30 | 30 | 30 | 30 |
| Calciumhydroxid | | 2 | – | 2 | – |
| Magnesiumoxid | | 15 | 10 | – | – |
| N,N-Dicyannamyliden-1,6-hexandiamin | | 2 | – | – | – |
| Carnaubawachs | | – | 1 | – | – |
| PbO (Bleiglätte) | | – | – | 15 | 5 |
| Triallylisocyanurat | | – | – | – | 3 |
| 2,5-Dimethyl-2,5(bis-tert.-butylperoxy)hexan | | – | – | – | 3 |

Das Fluorelastomere war ein handelsübliches Copolymerisat aus Vinylidenfluorid-Hexafluorpropylen und Tetrafluorethylen. "Viton" ist WZ der Firma Dupont de Nemours, USA. Die Type E 60 C ist ein selbstvernetzendes System.

0069904
HENKEL KGaA
ZR-FE/Patente

Beispiele 1 - 9

Die vorgenannten Mischungen A bis D wurden mit den in der nachstehenden Tabelle 2 wiedergegebenen erfindungsgemäßen Haftmischungen als planparallele Rundpuffer auf entsprechend  vorbereitete Stahlbleche (Strahlen mit Korund und Entfetten mit Trichlorethan) aufvulkanisiert. (ASTM-D 429, Methode A).

Die Haftmittel waren in Methylethylketon gelöst. In der nachfolgenden Tabelle ist in Abhängigkeit von der laufenden Nummer des Beispiels zunächst der Gehalt und die Zusammensetzung des Bindemittels wiedergegeben. Es folgen die Zerreißwerte nach 15-stündiger Lagerung bei 20° C in MPa sowie das Reißbild (R gibt den Prozentgehalt der Zerstörung im Elastomeren an, RC den Prozentgehalt an freigelegter bzw. zerrissener Bindeschicht). Das verwendete Phenolharz war ein handelsübliches Phenol-Novolakharz (= Novolak A) von 2 800 mPa·s und einer OH-Zahl von 490, während Phenolharz (= B) mit Allylalkohol verethert war und eine Viskosität von 3 200 mPa.s hatte.

### Tabelle 2

| Bei-spiel | Gew.-% | Zusammensetzung Bindemittel | Kautschuk-Mischungen | MPa | Reißbild | |
|---|---|---|---|---|---|---|
| 1 | 5 6 | t-Butylphenolharz $\gamma$-Aminopropyltriethoxysilan | A B C D | 6,1 4,8 3,3 6,5 | 100 80 70 100 | R R R R |
| 2 | | wie unter Beispiel 1, jedoch zusätzlich bei 200 $^{o}$C 6 Stunden getempert | A B C D | 5,0 5,0 4,2 4,7 | 100 80 50 90 | R R R R |
| 3 | 5 6 | t-Butylphenolharz (Resol) F=80-90$^{o}$C $\gamma$-Aminopropyltriethoxysilan | A B C D | 6,1 4,8 3,3 6,5 | 100 80 70 100 | R R R R |
| 4 | 3 5 12 | Novolak-A t-Butylphenolharz Vinyltriethoxysilan | A B C D | 6,2 5,1 4,0 6,1 | 100 100 70 90 | R R R R |
| 5 | 5 6 6 | Phenolharz-B Vinyltriethoxysilan $\gamma$-Aminopropyltriethoxysilan | A B C D | 6,0 5,1 4,0 6,1 | 100 100 70 80 | R R R R |

## Fortsetzung Tabelle 2

| Bei-spiel | Gew.-% | Zusammensetzung Bindemittel | Kautschuk-Mischungen | MPa | Reißbild | |
|---|---|---|---|---|---|---|
| 6 | 5<br>3<br>12 | Phenolharz-B<br>t-Butylphenolharz<br>$\gamma$-Aminopropyltriethoxysilan | A<br>B<br>C<br>D | 6,6<br>5,2<br>5,6<br>6,9 | 100<br>100<br>90<br>100 | R<br>R<br>R<br>R |
| 7 | 3<br>5<br>12 | Epoxinovolak<br>Phenolharz-B<br>$\gamma$-Aminopropyltriethoxysilan | A<br>B<br>C<br>D | 4,8<br>5,1<br>4,2<br>4,4 | 90<br>80<br>100<br>50 | R<br>R<br>R<br>R |
| 8 | 3<br>5<br>12 | t-Butylphenolharz<br>Phenolharz-B<br>$\gamma$-Mercaptopropyltriethoxysilan | A<br>B<br>C<br>D | 6,6<br>5,2<br>5,5<br>4,9 | 100<br>90<br>100<br>50 | R<br>R<br>R<br>R |
| 9 | 3<br>5<br>12 | t-Butylphenolharz<br>Phenolharz-B<br>$\gamma$-Methacryloxypropyltriethoxysilan | A<br>B<br>C<br>D | 6,6<br>5,6<br>5,2<br>6,9 | 100<br>90<br>70<br>90 | R<br>R<br>R<br>R |

Patentanmeldung D 6400 EP    9

HENKEL KGaA
ZR-FE/Patente

0069904

## Vergleichsversuch an Stahl

In einem Vergleichsversuch wurde als Bindemittel eine insgesamt 12 %ige Lösung aus Vinyltriethoxysilan und $\gamma$-Aminopropyltriethoxysilan (gleiche Gewichtsteile der Silane) in Ethanol hergestellt und damit Kautschukmischungen A bis D auf Stahl aufvulkanisiert. In der nachfolgenden Tabelle 3 sind die Ergebnisse in Abhängigkeit von der Kautschukmischung, und zwar nach normaler Lagerung wie nach Temperung bei 200 °C während 6 Stunden wiedergegeben.

### Tabelle 3

| Kautschuk-Mischung | Lagerung bei 20 °C | | Temperung | |
|---|---|---|---|---|
| | MPa | Reißbild | MPa | Reißbild |
| A | 4,2 | 80 R | 3,2 | 10 R |
| B | 3,1 | 80 R | 2,1 | 10 R |
| C | 1,2 | 100 RC | nicht | 100 RC |
| D | 2,6 | 100 RC | meßbar | 100 RC |

## Beispiele 9 und 10

Die Bindemittel der Beispiele 3 und 6 wurden als Haftvermittler zum Aufvulkanisieren von Kautschukmischung A
und D verwendet. Als Metall diente Messing MS 58.
Neben der üblichen Lagerung wurde eine Temperung
bei 200° C während 6 Stunden vorgenommen.
Die Ergebnisse sind in der nachfolgenden Tabelle 4
(vergl. vorstehende Erklärungen zu den anderen Beispielen) wiedergegeben.

## Tabelle 4

| Bei-spiel | Kautschuk-Mischung | Bindemittel | übliche Lagerung | | Temperung | |
|---|---|---|---|---|---|---|
| | | | MPa | Reißbild | MPa | Reißbild |
| 9 | A | 5 Gew.-% t-Butylphenol-Harz | 5,8 | 80 R | 5,0 | 100 R |
| | D | 6 Gew.-% γ-Aminopropyl-triethoxy-silan | 5,2 | 80 R | 4,7 | 90 R |
| 10 | A | 5 Gew.-% Phenolharz-B | 6,5 | 100 R | 5,1 | 100 R |
| | D | 3 Gew.-% t-Butylphenol-Harz | | | | |
| | | 12 Gew.-% γ-Aminopropyl-triethoxysilan | 6,5 | 100 R | 6,1 | 90 R |

## Vergleichsversuche an Messing:

Zum Vergleich wurden die Kautschuk-Mischungen A und D
an Messing gebunden. Bindemittel war eine insgesamt
12 %ige Lösung von Vinyl-triethoxysilan und $\gamma$-Amino-
propyl-triethoxysilan (beide Silane im gleichen
Gewichtsverhältnis) in Ethanol. Es wurde nach
15-stündiger Lagerung bzw. Temperung bei 200° C während
6 Stunden getestet. In der nachfolgenden Tabelle 5
sind in Abhängigkeit von der Kautschuk-Mischung
die gefundenen Werte wiedergegeben.

## Tabelle 5

| Kautschuk-Mischung | Lagerung bei 20° C | | Temperung | |
|---|---|---|---|---|
| | MPa | Reißbild | MPa | Reißbild |
| A | 3,2 | 20 R | 2,2 | 10 R |
| D | 1,2 | 100 RC | nicht meßbar | 100 RC |

<u>Patentansprüche</u>

1) Bindemittel für Fluorelastomere auf Basis von
   reaktionsfähige Gruppen enthaltende Silanverbindungen, gekennzeichnet durch einen Gehalt an
   a) ein reaktive Gruppen enthaltendes Alkoxysilan
      sowie
   b) ein noch reaktives Phenolharz bzw.
      Phenolharzvorkondensat, wobei das Gewichtsverhältnis von a : b zwischen 1 : 5 bis 1 : 0,1
      liegen soll.

2) Bindemittel nach Anspruch 1, dadurch gekennzeichnet,
   daß das Gewichtsverhältnis von a : b zwischen 1 : 2,5
   bis 1 : 0,5 und der Gesamtfeststoffgehalt des Bindemittels zwischen etwa 5 und 30 Gewichtsprozent liegt.

3) Bindemittel nach Anspruch 1 und 2, dadurch gekennzeichnet, daß die Komponente b besteht aus 10 bis 40
   Gewichtsteilen eines noch reaktionsfähigen substituierten Phenolharzes und 20 bis 80 Gewichtsteilen
   eines normalen, nicht substituierten Phenolharzes,
   bezogen auf 100 Gewichtsteile des Silans.

4) Bindemittel nach Anspruch 1 bis 3, dadurch gekennzeichnet, daß das Bindemittel in niederen Ketonen,
   Alkoholen oder Estern eingesetzt wird und Silan
   und Phenolharz im Gewichtsverhältnis zwischen 1 :
   1,5 und 1 : 0,7 vorliegen.

5) Verwendung der Bindemittel nach Anspruch 1 bis 4
   zum festen Verbinden von Stahl und Messing mit Fluorkautschuk durch Aufvulkanisieren.

. . .

0069904

Nummer der Anmeldung

## EUROPÄISCHER RECHERCHENBERICHT

**Europäisches Patentamt**

EP 82 10 5698

### EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| | --- | | C 09 J 3/16 |
| X | CHEMICALS ABSTRACTS, Band 87, Nr. 10, 5. September 1977, Seite 37, Nr. 69164v, Columbus Ohio (USA); & JP - A - 77 45 634 (SHOWA NEOPRENE K.K.) (11.04.1977) *Zusammenfassung* | 1,2,4, 5 | C 08 L 61/06 C 08 K 5/54 C 08 J 5/12 |
| | --- | | |
| A | GB-A- 664 527 (BAKELITE) *Patentansprüche 1,10* | 3,4 | |
| | --- | | |
| A | CH-A- 555 378 (CHEMISCHE WERKE ALBERT) *Patentansprüche I+II, Unteranspruch 6; Spalte 4, Zeilen 6-11; Beispiel 8; Spalte 2, Zeilen 8-21* | 3,4 | |
| | | | **RECHERCHIERTE SACHGEBIETE (Int. Cl. 3)** |
| | --- | | |
| A | GB-A-1 185 576 (KOPPERS) *Patentansprüche 1-13* | 3 | C 09 J C 08 J C 08 L C 08 G |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 28-10-1982 | HALLEMEESCH A.D. |